# EUROPÄISCHE PATENTSCHRIFT

(11) **EP 1 722 916 B1**
(45) Veröffentlichungstag und Bekanntmachung des Hinweises auf die Patenterteilung: **02.05.2012**
(21) Anmeldenummer: 05730994.0
(22) Anmeldetag: 04.03.2005
(51) Int. Cl.: B23K 20/12

(54) **ROTATIONSREIBSCHWEISSANLAGE**
SPIN WELDING SYSTEM
DISPOSITIF DE SOUDAGE PAR FRICTION ROTATION

(30) Priorität: 10.03.2004 DE 102004011615
(43) Veröffentlichungstag der Anmeldung: 22.11.2006
(73) Patentinhaber: MTU Aero Engines GmbH, 80995 München (DE)
(72) Erfinder: DZIALAS, Karsten, 80809 München (DE); SPARKS, Thomas, Roger, 85402 Kranzberg (DE)
(86) Internationale Anmeldenummer: PCT/DE2005/000364
(87) Internationale Veröffentlichungsnummer: WO 2005/087424

(56) Entgegenhaltungen:
- GB-A- 1 053 233
- US-A- 3 235 157
- US-A- 3 694 896
- US-A- 3 735 910
- US-A- 4 030 658

## Beschreibung

Die Erfindung betrifft eine Rotationsreibschweißanlage nach dem Oberbegriff des Patentanspruchs 1 Eine solche Rotationsreibschweißanlage ist aus US 3 735 910 A bekannt.

Bei der Fertigung von Gasturbinen ist das Reibschweißen ein weitverbreitetes Fügeverfahren. Das Reibschweißen gehört zu den sogenannten Pressschweißverfahren, wobei man beim Reibschweißen unter anderem zwischen dem sogenannten linearen Reibschweißen, dem Rotationsreibschweißen und dem sogenannten Rührreibschweißen unterscheidet. Die hier vorliegende Erfindung betrifft das sogenannte Rotationsreibschweißen, bei welchem rotationssymmetrische Bauteile durch Reibung aneinander gefügt bzw. miteinander verbunden werden. Beim Rotationsreibschweißen rotiert ein erstes Bauteil, wohingegen das andere Bauteil stillsteht und mit einer bestimmten Kraft gegen das rotierende Bauteil gedrückt wird. Hierbei passen sich Fügeflächen der miteinander zu verbindenden Bauteile durch Warmverschmieden aneinander an.

Das Rotationsreibschweißen wird auf sogenannten Rotationsreibschweißanlagen durchgeführt, wobei nach dem Stand der Technik das rotierende Bauteil auf einer sich drehenden Spindel und das stillstehende Bauteil auf einer nicht-drehenden Spindel gelagert ist. Nach dem Stand der Technik ist der drehenden Spindel eine Schwungscheibe bzw. ein Schwungmassenkörper zugeordnet. Der Schwungmassenkörper und die Drehzahl der drehenden Spindel sind auf die miteinander zu verbindenden Bauteile, insbesondere auf die Werkstoffe bzw. Materialien der miteinander zu verbindenden Bauteile, abgestimmt. Bei Bauteilen, die aus einer Nickelbasislegierung gebildet sind, kommen vorzugsweise große bzw. schwere Schwungmassen und geringe Drehzahlen der drehenden Spindel zur Anwendung. Es gilt dabei der Zusammenhang, dass große bzw. schwere Schwungmassen mit einer geringen Drehzahl der drehenden Spindel und kleine bzw. leichte Schwungmassen mit einer großen Drehzahl der drehenden Spindel gekoppelt sind.

Bei aus dem Stand der Technik bekannten Rotationsreibschweißanlagen ist es erforderlich, bei einer Änderung der miteinander zu verbindenden Bauteile, insbesondere bei einer Änderung in der Materialzusammensetzung der miteinander zu verbindenden Bauteile, die Rotationsreibschweißanlage durch Austausch bzw. Anpassung des Schwungmassenkörpers bzw. der Schwungscheibe an die veränderten Bedingungen anzupassen. Hierzu müssen an der Rotationsreibschweißanlage nach dem Stand der Technik aufwendige Einrichtarbeiten durchgeführt werden. So werden hierzu nach dem Stand der Technik die Schwungmassenkörper mit einem Kran aufgesetzt oder abgesetzt. Derartige Einrichtarbeiten nehmen eine große Zeit in Anspruch und bewirken eine Stillstandszeit der Rotationsreibschweißanlage.

Das Dokument US 3 735 910 A schützt eine Rotationsreibschweißanlage, bei der die Schwungmasse in mehrere separate Schwungmassenkörper aufgeteilt ist, die nach Bedarf mit der drehenden Spindel verbunden werden. Die nicht benötigten Schwungmassenkörper sind auf einer stillstehenden, zu der drehenden Spindel koaxialen Achse gelagert und müssen zu ihrer Aktivierung axial auf die Spindel verschoben und dort drehfest fixiert werden. Siehe Figur 1 dieses Dokuments.

Das Dokument GB 1 053 233 A betrifft eine Rotationsreibschweißanlage, bei der die Schwungmasse aus mehreren Schwungmassenkörpern zusammengesetzt sein kann, wobei die Körper koaxial hintereinander angeordnet sind. Siehe die Figuren 3 und 4 dieses Dokuments. Gemäß Figur 4 sind die Schwungmassenkörper auf einer separaten Schwungmassenwelle angeordnet, welche über ein Getriebe mit der das rotierende Bauteil tragenden Spindel gekoppelt ist. Mit dieser Anordnung kann die Schwungmasse langsamer oder schneller rotieren, als die Spindel, so dass die Schweißparameter noch variabler sind.

Hiervon ausgehend liegt der vorliegenden Erfindung das Problem zu Grunde, eine besonders schnell und einfach umrüstbare Rotationsreibschweißanlage zu schaffen.

Dieses Problem wird dadurch gelöst, dass die eingangs genannte Rotationsreibschweißanlage durch die Merkmale des kennzeichnenden Teils des Patentanspruchs 1 oder des Patentanspruchs 2 weitergebildet ist. Im Sinne der hier vorliegenden Erfindung ist es möglich, ohne aufwendige Umrüstarbeiten bzw. Einrichtarbeiten die Rotationsreibschweißanlage an sich ändernde Bauteile anzupassen.

Nach einer Ausführungsform der Erfindung sind die mehreren Schwungmassenkörper der ersten, drehenden Spindel zugeordnet, derart, dass dieselben in Wirkungseingriff mit der ersten Spindel zusammen mit derselben rotieren und außer Wirkungseingriff mit der ersten Spindel gegenüber derselben feststehen, wobei hierzu mindestens einer der Schwungmassenkörper mit der ersten, drehenden Spindel fest verbunden ist, wohingegen der oder jeder andere Schwungmassenkörper drehbar auf derselben gelagert ist, derart, dass der oder jeder drehbar auf der ersten Spindel gelagerte Schwungmassenkörper selektiv an den oder jeden fest mit der ersten Spindel verbunden Schwungmassenkörper ankoppelbar bzw. abkoppelbar ist. Diese Ausgestaltung der Rotationsreibschweißanlage ist konstruktiv besonders einfach. Gemäß dieser Ausführungsform der Erfindung sind die mehreren Schwungmassenkörper alternativ einer Schwungmassenwelle zugeordnet, wobei die Schwungmassenwelle mit der ersten, drehenden Spindel über ein Übersetzungsgetriebe gekoppelt ist. Über das Übersetzungsgetriebe ist die erste Spindel, die das rotierende Bauteil trägt, an eine schneller rotierende Schwungmassenwelle ankoppelbar. In diesem Fall können kleinere Schwungmassen, die mit höherer Drehzahl rotieren, verwendet werden, um das gleiche Drehmoment zu erzeugen. Auch hier ist ein Schwungmassenkörper fest mit der Welle verbunden, die anderen Körper sind drehbar auf dieser gelagert.

Nach einer alternativen Ausführungsform der Erfindung sind die Schwungmassenkörper zwischen zwei Magazinhälften hin und her bewegbar, derart, dass die Schwungmassenkörper in einer in eine erste fest mit der ersten Spindel verbundene Magazinhälfte eingeschobenen Position in Wirkungseingriff mit der ersten Spindel und in einer in eine zweite gegenüber der Spindel drehbare Magazinhälfte eingeschobenen Position außer Wirkungseingriff mit der ersten Spindel sind.

Vorzugsweise sind beide Magazinhälften als Revolvermagazin ausgebildet, wobei die beiden Magazinhälften Ausnehmungen aufweisen, um die Schwungmassenkörper aufzunehmen.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine schematisierte Darstellung einer Rotationsreibschweißanlage nach dem Stand der Technik;
- Fig. 2: eine Rotationsreibschweißnaht zwischen zwei miteinander verbundenen Bauteilen;
- Fig. 3: ein schematisiertes Detail aus einer erfindungsgemäßen Rotationsreibschweißanlage nach einem ersten Ausführungsbeispiel der Erfindung;
- Fig. 4: ein schematisiertes Detail aus einer erfindungsgemäßen Rotationsreibschweißanlage nach einem zweiten Ausführungsbeispiel der Erfindung;

- Fig. 5: eine schematisierte Darstellung einer Rotationsreibschweißanlage nach einem weiteren Ausführungsbeispiel der Erfindung;
- Fig. 6: ein schematisiertes Detail aus einer erfindungsgemäßen Rotationsreibschweißanlage nach einem weiteren Ausführungsbeispiel der Erfindung;
- Fig. 7: das Detail gemäß Fig. 6 in einer um gegenüber Fig. 6 um 90° gedrehten Ansicht.

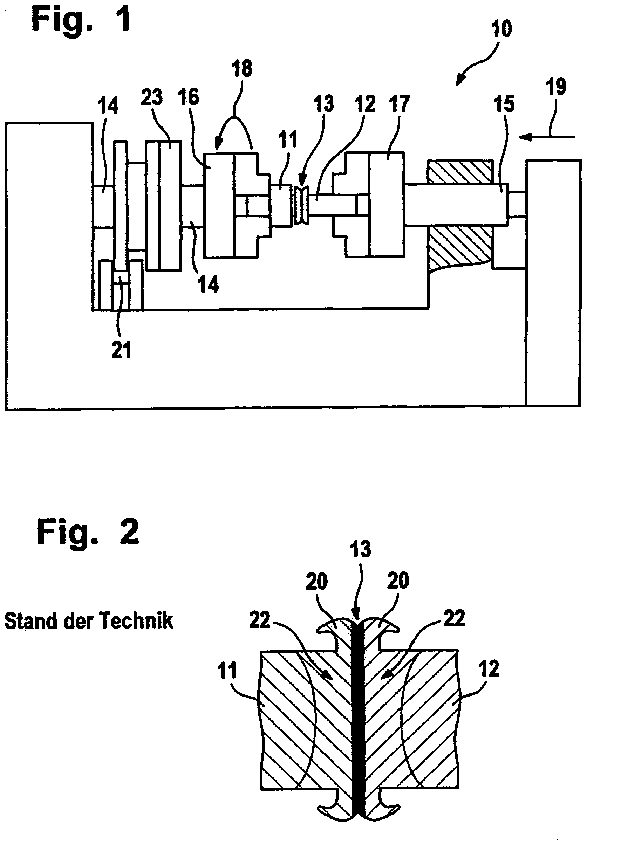

Fig. 1 zeigt eine Rotationsreibschweißanlage 10 zum Fügen zweier Bauteile 11 und 12 nach dem Stand der Technik, wobei sich zwischen den Bauteilen 11 und 12 beim Rotationsreibschweißen die in Fig. 2 vergrößert dargestellte Verbindungsnaht 13 ausbildet. Die in Fig. 1 dargestellte Rotationsreibschweißanlage 10 nach dem Stand der Technik verfügt über eine erste, drehende Spindel 14 und eine zweite, nicht-drehende Spindel 15. Auf der ersten, drehenden Spindel 14 ist das Bauteil 11 und auf der zweiten, nicht-drehenden Spindel das Bauteil 12 der miteinander zu verbindenden Bauteile 11 und 12 angeordnet bzw. gelagert. Hierzu sind den Spindeln 14 und 15 jeweils Spanneinrichtungen 16 und 17 zugeordnet. Mithilfe der Spanneinrichtungen 16 und 17 sind die miteinander zu verbindenden Bauteile 11 und 12 auf der jeweiligen Spindel 14 bzw. 15 befestigbar.

Um nun die beiden Bauteile 11 und 12 mithilfe des Rotationsreibschweißens miteinander zu verbinden, wird das auf der ersten, drehenden Spindel 14 gelagerte Bauteil 11 im Sinne des Pfeils 18 drehend bewegt, wobei das auf der zweiten, nicht-drehenden Spindel 15 gelagerte Bauteil 12 im Sinne des Pfeils 19 mit einer Kraft gegen das Bauteil 11 gedrückt wird. Die Relativrotation zwischen den Bauteilen 11 und 12 sowie diese Kraft erzeugen eine Reibung und damit Erwärmung der beiden Bauteile 11 und 12 an Kontaktflächen 21, 22 derselben. Hierbei erfolgt an den Kontaktflächen ein Warmverschmieden des Werkstoffs der Bauteile 11 und 12. Hierbei bildet sich die in Fig. 2 schematisiert dargestellte Verbindungswulst 20 aus.

Der Rotationsreibschweißanlage 10 nach dem Stand der Technik ist gemäß Fig. 1 ein Schwungmassenkörper 23 zugeordnet, nämlich im Bereich der ersten, sich drehenden Spindel 14. Nach dem Stand der Technik ist dieser Schwungmassenkörper 23 der Rotationsreibschweißanlage 10 an die miteinander zu verbindenden Bauteile 11 und 12 angepasst. Sollen nach dem Verschweißen zweier Bauteile unterschiedliche Bauteile miteinander verschweißt werden, so muss nach dem Stand der Technik der Schwungmassenkörper 23 im Zuge aufwendiger Einrichtmaßnahmen an der Rotationsreibschweißanlage 10 ausgetauscht werden. Dies ist sehr zeitaufwendig.

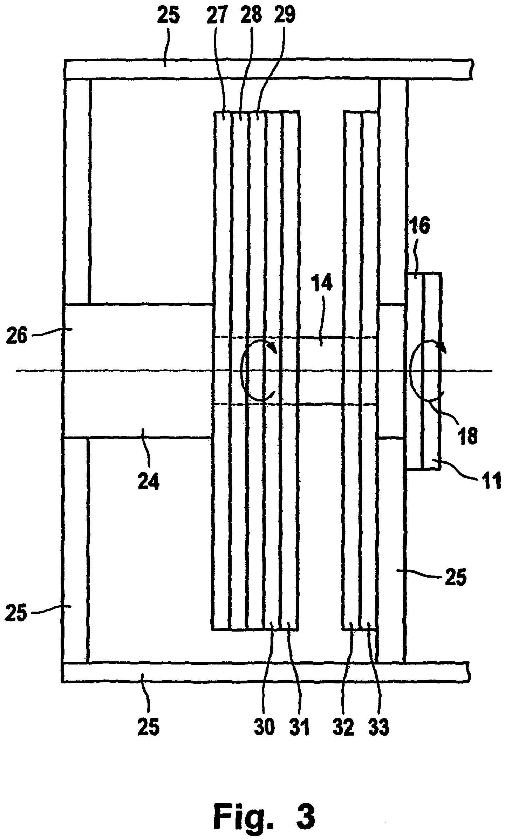

Fig. 3 zeigt einen Ausschnitt aus einer erfindungsgemäßen Rotationsreibschweißanlage nach einem ersten Ausführungsbeispiel der hier vorliegenden Erfindung im Bereich der sich drehenden, ersten Spindel 14 und einer der ersten Spindel 14 zugeordneten Spanneinrichtung 16 zur Aufnahme des sich mit der Spindel 14 und der Spanneinrichtung 16 drehenden Bauteils 11. Fig. 3 zeigt weiterhin einen Rotor 24 zum Antreiben der Spindel 14 und einen Maschinenrahmen 25, wobei der Motor 24 am Maschinenrahmen 25 über ein Drucklager 26 gelagert ist.

Im Sinne der hier vorliegenden Erfindung sind der ersten, drehenden Spindel 14 mehrere Schwungmassenkörper 27, 28, 29, 30, 31, 32 und 33 zugeordnet. Die Schwungmassenkörper 27 bis 33 sind im Bedarfsfall, d.h. zur Anpassung der Rotationsreibschweißanlage an die miteinander zu verbindenden Bauteile, außer Wirkungseingriff oder in Wirkungseingriff mit der sich drehenden, ersten Spindel 14 bringbar. Im gezeigten Ausführungsbeispiel der Fig. 3 rotieren die Schwungmassenkörper 27 bis 31 zusammen mit der Spindel 14, wohingegen die Schwungmassenkörper 32 und 33 gegenüber der Spindel 14 feststehen. Im Ausführungsbeispiel der Fig. 3 sind demnach die Schwungmassenkörper 27 bis 33 der Spindel 14 zugeordnet und auf derselben gelagert. Die Schwungmassenkörper 27 bis 33 werden demnach im Ausführungsbeispiel der Fig. 3 bei Bedarf eingekoppelt bzw. ausgekoppelt. Sowohl die in Wirkungseingriff mit der ersten, drehenden Spindel 14 als auch die außer Wirkungseingriff mit derselben stehenden Schwungmassenkörper sind auf der Rotationsreibschweißanlage gelagert. Hierdurch können Einrichtzeiten an der Rotationsreibschweißanlage deutlich reduziert werden. Es sei darauf hingewiesen, dass alle Schwungmassenkörper 27 bis 33 außer Wirkungseingriff mit der ersten, drehenden Spindel 14 gebracht werden können, so dass in diesem Fall die Masse der ersten, drehenden Spindel 14 die einzige effektive Schwungmasse bildet.

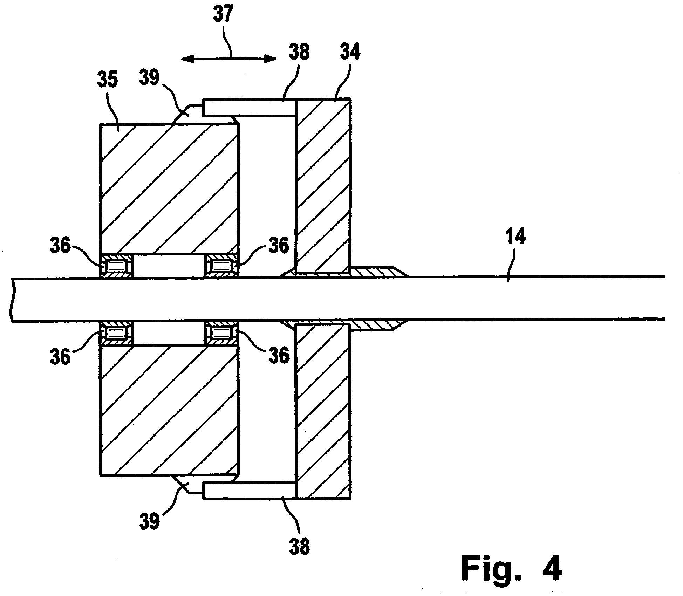

Fig. 4 zeigt eine bevorzugte Weiterbildung des Ausführungsbeispiels der Fig. 3. Auch beim Ausführungsbeispiel der Fig. 4 sind auf der ersten, sich drehenden Spindel 14 Schwungmassenkörper 34 und 35 gelagert. Der erste Schwungmassenkörper 34 ist mit der Spindel 14 derart verbunden, dass derselben stets mit der Spindel 14 rotiert. Der zweite Schwungmassenkörper 35 hingegen ist über Drehlager 36 drehbar auf der Spindel 14 gelagert. Wie Fig. 4 entnommen werden kann, sind die beiden Schwungmassenkörper 34 und 35 im Sinne des Doppelpfeils 37 in axialer Richtung der Spindel 14 derart relativ zueinander verschiebbar, dass der zweite Schwungmassenkörper 35 an den ersten Schwungmassenkörper 34 ankoppelbar ist bzw. von demselben abkoppelbar ist. In der in Fig. 4 gezeigten Position greift der erste Schwungmassenkörper 34 mit klauenartigen Elementen 38 in entsprechende Vorsprünge bzw. Ausnehmungen 39 des zweiten Schwungmassenkörpers 35 ein. In Fig. 4 ist demnach der zweite Schwungmassenkörper 35 an den ersten Schwungmassenkörper 34 angekoppelt. In diesem Zustand rotieren beide Schwungmassenkörper 34 und 35 zusammen mit der Spindel 14. Durch Auseinanderbewegen der beiden Schwungmassenkörper 34 und 35 im Sinne des Doppelpfeils 37 können die klauenartigen Elemente 38 außer Eingriff mit den Vorsprüngen bzw. Ausnehmungen 39 gebracht werden. In diesem Fall ist dann der zweite Schwungmassenkörper 35 vom ersten Schwungmassenkörper 34 abgekoppelt und es rotiert lediglich der erste Schwungmassenkörper 34 zusammen mit der Spindel 14. In diesem Fall steht der zweite Schwungmassenkörper 35 bedingt durch die Massenträgheit desselben gegenüber der sich drehenden Spindel 14 still. Das im Zusammenhang mit Fig. 4 beschriebene Einkoppeln bzw. Auskoppeln der beiden Schwungmassenkörper 34 und 35 kann entweder mechanisch, elektrisch oder hydraulisch erfolgen. Es sei darauf hingewiesen, dass auf diese Art und Weise auch mehrere Schwungmessenkörper 35 mit dem Schwungmassenkörper 34 in Wirkungseingriff oder außer Wirkungseingriff gebracht werden können. Auch die Masse der sich drehenden Spindel 14 wirkt als Schwungmasse. Sowohl die in Wirkungseingriff mit der ersten, drehenden Spindel 14 als auch die außer Wirkungseingriff mit derselben stehenden Schwungmassenkörper sind auf der Rotationsreibschweißanlage gelagert.

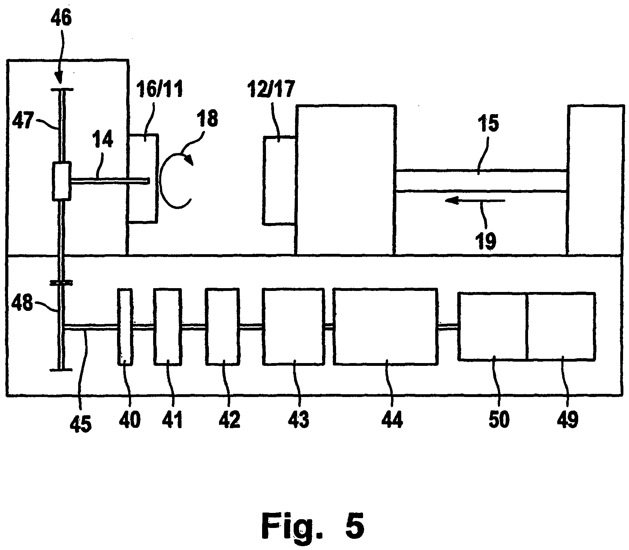

Fig. 5 zeigt ein weiteres Ausführungsbeispiel der hier vorliegenden Erfindung einer erfindungsgemäßen Rotationsreibschweißanlage. Bei der in Fig. 5 gezeigten Rotationsreibschweißanlage wirken wiederum mit der sich drehenden Spindel 14 mehrere Schwungscheibenkörper bzw. Schwungmassenkörper 40, 41, 42, 43 und 44 zusammen, wobei die Schwungmassenkörper 40 bis 44 im Unterschied zu den oben beschriebenen Ausführungsbeispielen nicht unmittelbar der sich drehenden Spindel 14 zugeordnet sind, sondern vielmehr auf einer Schwungmassenwelle 45 angeordnet sind. Die auf der Schwungmassenwelle 45 angeordneten Schwungmassenkörper 40 bis 44 sind wiederum selektiv, d.h. je nach Bedarfsfall, außer Wirkungseingriff oder in Wirkungseingriff mit der sich drehenden Spindel 14 bringbar. Das Ankoppeln bzw. Abkoppeln eines Schwungmassenkörpers an einen oder mehrere andere Schwungmassenkörper auf der Schwungmassenwelle 45 kann analog zum Ausführungsbeispiel der Fig. 4 erfolgen.

Im Ausführungsbeispiel der Fig. 5 ist die Spindel 14 mit der Schwungmassenwelle 45 über ein Übersetzungsgetriebe 46 gekoppelt. Ein erstes Getrieberad 47 des Übersetzungsgetriebes 46 ist der sich drehenden Spindel 14 zugeordnet, ein zweites Getrieberad 48 ist der Schwungmassenwelle 45 zugeordnet. Wie Fig. 5 entnommen werden kann, verfügt das der Schwungmassenwelle 45 zugeordnete Getrieberad 48 über einen kleineren Radius bzw. Durchmesser wie das der Spindel 14 zugeordnete Getrieberad 47. Mithilfe des Übersetzungsgetriebes 46 kann die Spindel 14 an schneller rotierende Schwungmassenkörper 40 bis 44 angekoppelt werden. Über das Übersetzungsgetriebe 46 können demnach Drehzahlen angepasst bzw. verändert werden. Im Ausführungsbeispiel der Fig. 5 kann mit wesentlich kleineren Schwungmassen gearbeitet werden, die auf der Schwungmassenwellen 45 mit höheren Drehzahlen angetrieben werden, um ein ausreichendes Drehmoment an der Spindel 14 bereitzustellen. Fig. 5 zeigt weiterhin einen elektrischen Antriebsmotor 49 zum Antreiben der Schwungmassenwelle 45 sowie Mittel 50, die dem Ankoppeln bzw. Auskoppeln der Schwungmassenkörper 40 bis 44 an die Schwungmassenwelle 45 dienen. Die Mittel 50 können wiederum mechanischer, elektrischer oder hydraulischer Natur sein. Auch in diesem Ausführungsbeispiel kann die Masse der Spindel 14 die einzige effektive Schwungmasse sein. Sowohl die in Wirkungseingriff mit der ersten, drehenden Spindel 14 als auch die außer Wirkungseingriff mit derselben stehenden Schwungmassenkörper sind auf der Rotationsreibschweißanlage gelagert.

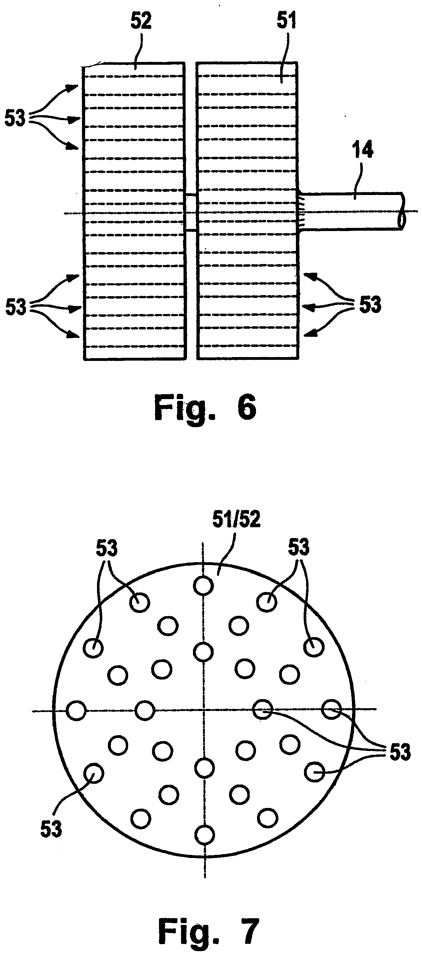

Fig. 6 und 7 zeigen ein Detail aus einer Rotationsreibschweißanlage nach einem weiteren Ausführungsbeispiel der hier vorliegenden Erfindung. Beim Ausführungsbeispiel der Fig. 6 und 7 ist mit der rotierenden Spindel 14 eine erste Magazinhälfte 51 eines Schwungmassenmagazins fest verbunden. Die erste Magazinhälfte 51 rotiert demnach mit der Spindel 14. Zusätzlich verfügt das Schwungmassenmagazin des Ausführungsbeispiels der Fig. 6 und 7 über eine zweite Magazinhälfte 52. Die zweite Magazinhälfte 52 ist von der Spindel 14 entkoppelt und feststehend.

In beide Magazinhälften 51 und 52 sind Ausnehmungen 53 eingebracht. Die in die beiden Magazinhälften 51 und 52 eingebrachten Ausnehmungen 53 fluchten zueinander. In dem Fall, in dem zwischen den beiden Magazinhälften 51 und 52 keine Relativbewegung erfolgt, steht einer Ausnehmung 53 im Bereich der ersten Magazinhälfte 51 eine korrespondierenden Ausnehmung 53 im Bereich der zweiten Magazinhälfte 52 gegenüber. Die Ausnehmungen 53 der beiden Magazinhälften 51 und 52 sind nun derart ausgebildet, dass dieselben Schwungmassenkörper aufnehmen können. Dabei ist ein Schwungmassenkörper von einer Ausnehmung 53 im Bereich der ersten Magazinhälfte 51 in eine korrespondierende Ausnehmung 53 der zweiten Magazinhälfte 52 einschiebbar und auch wieder von der zweiten Magazinhälfte 52 in die erste Magazinhälfte 51 rückführbar. Demnach kann durch einfaches Verschieben der Schwungmassenkörper zwischen den beiden Magazinhälften 51 und 52 die mit der Spindel 14 rotierende Schwungmasse einfach angepasst werden. Ein derart ausgestaltetes Schwungmassenmagazin bezeichnet man auch als Revolvermagazin. Die Schwungmassen sind als stabförmige Elemente ausgebildet, deren Außenkontur an die Innenkontur der Ausnehmungen angepasst ist. Bei der Beladung der Ausnehmungen 53 der ersten Magazinhälfte 51 mit Schwungmassenkörpern müssen durch entsprechende Beladung derselben Unwuchten vermieden werden.

Mit allen gezeigten Ausführungsbeispielen ist es möglich, eine Rotationsreibschweißanlage ohne zeitaufwendige Umrüstarbeiten im Hinblick auf zur Verbindung von zwei Bauteilen erforderliche Schwungmassen anzupassen. Sowohl die in Wirkungseingriff mit der ersten, drehenden Spindel als auch die außer Wirkungseingriff mit derselben stehenden Schwungmassenkörper sind auf der Rotationsreibschweißanlage gelagert. Zeitaufwendige Einrichtarbeiten, welche die Verfügbarkeit der Rotationsreibschweißanlage beschränken, können so vermieden werden.

## Patentansprüche

1. Rotationsreibschweißanlage zum Fügen zweier Bauteile, mit einer ersten, drehenden, Spindel (14) und einer zweiten, nicht-drehenden Spindel (15), wobei auf der ersten Spindel (14) ein erstes Bauteil (11) der miteinander zu verbindenden Bauteile und auf der zweiten Spindel (15) ein zweites Bauteil (12) der miteinander zu verbindenden Bauteile gelagert ist, und mit mehreren auf der Rotationsreibschweißanlage gelagerten Schwungmassenkörpern , wobei die Schwungmassenkörper mit der ersten, drehenden Spindel (14) derart zusammenwirken, dass mindestens einer dieser Schwungmassenkörper im Bedarfsfall, außer Wirkungseingriff oder in Wirkungseingriff mit der ersten, drehenden Spindel (14) bringbar ist, wobei sowohl die in Wirkungseingriff mit der ersten, drehenden Spindel (14) als auch die außer Wirkungseingriff mit derselben stehenden Schwungmassenkörper auf der Rotationsreibschweißanlage gelagert sind,
**dadurch gekennzeichnet,**
**dass** die mehreren Schwungmassenkörper (27, 28, 29, 30, 31, 32, 33, 34, 35) der ersten, drehenden Spindel (14) zugeordnet sind, derart, dass dieselben in Wirkungseingriff mit der ersten Spindel (14) zusammen mit derselben rotieren und außer Wirkungseingriff mit der ersten Spindel (14) gegenüber derselben stillstehen, und dass mindestens einer der Schwungmassenkörper (34) mit der ersten, drehenden Spindel (14) fest verbunden ist, wohingegen der oder jede andere Schwungmassenkörper (35) drehbar auf derselben gelagert ist, derart, dass der oder jeder drehbar auf der ersten Spindel gelagerte Schwungmassenkörper selektiv an den oder jeden fest mit der ersten Spindel verbunden Schwungmassenkörper ankoppelbar und abkoppelbar ist.

2. Rotationsreibschweißanlage zum Fügen zweier Bauteile, mit einer ersten, drehenden Spindel (14) und einer zweiten, nicht-drehenden Spindel (15), wobei auf der ersten Spindel (14) ein erstes Bauteil (11) der miteinander zu verbindenden Bauteile und auf der zweiten Spindel (15) ein zweites Bauteil (12) der miteinander zu verbindenden Bauteile gelagert ist, und mit mehreren auf der Rotationsreibschweißanlage gelagerten Schwungmassenkörpern, wobei die Schwungmassenkörper mit der ersten, drehenden Spindel (14) derart zusammenwirken, dass mindestens einer dieser Schwungmassenkörper im Bedarfsfall außer Wirkungseingriff oder in Wirkungseingriff mit der ersten, drehenden Spindel (14) bringbar ist, wobei sowohl die in Wirkungseingriff mit der ersten, drehenden Spindel (14) als auch die außer Wirkungseingriff mit derselben stehenden Schwungmassenkörper auf der Rotationsreibschweißanlage gelagert sind, und wobei die Schwungmassenkörper zwischen zwei Magazinhälften hin und her bewegbar sind und in einer in eine erste Magazinhälfte (51) eingeschobenen Position in Wirkungseingriff mit der ersten Spindel (14) und in einer in eine zweite Magazinhälfte (52) eingeschobenen Position außer Wirkungseingriff mit der ersten Spindel (14) sind,
**dadurch gekennzeichnet,**
**dass** die erste Magazinhälfte (51) mit der ersten Spindel (14) fest verbunden und die zweite Magazinhälfte (52) gegenüber der ersten Spindel (14) drehbar ist.

3. Rotationsreibschweißanlage nach Anspruch 2
**dadurch gekennzeichnet,**
**dass** beiden Magazinhälften (51, 52) als Revolvermagazin ausgebildet sind, wobei die beiden Magazinhälften (51, 52) Ausnehmungen (53) aufweisen, um die Schwung massenkörper aufzunehmen.

4. Rotationsreibschweißanlage nach Anspruch 1,
**dadurch gekennzeichnet,**
**dass** die mehreren Schwungmassenkörper (40, 41, 42, 43,44) einer Schwungmassenwelle (45) zugeordnet sind, wobei die Schwungmassenwelle (45) in bekannter Weise mit der ersten, drehenden Spindel (14) über ein Übersetzungsgetriebe (46) gekoppelt ist, und dass mindestens einer der Schwungmassenkörper mit der Schwungmassenwelle fest verbunden ist, wohingegen der oder jede andere Schwungmassenkörper drehbar auf derselben gelagert sind, derart, dass der oder jeder drehbar auf der Schwungmassenwelle gelagerte Schwungmassenkörper selektiv an den oder jeden fest mit der Schwungmassenwelle verbundenen Schwungmassenkörper ankoppelbar und abkoppelbar ist.

## Claims

1. A rotary friction welding system for joining two components, having a first, rotating spindle (14) and a second, non-rotating spindle (15), wherein a first component (11) of the components that are to be connected together is mounted on the first spindle (14) and a second component (12) of the components that are to be connected together is mounted on the second spindle (15), and having a plurality of flywheel-mass bodies mounted on the rotary friction welding system, wherein the flywheel-mass bodies cooperate with the first, rotating spindle (14) in such a way that at least one of these flywheel-mass bodies can, if necessary, be operatively disengaged from or operatively engaged with the first, rotating spindle (14), wherein both the flywheel-mass bodies operatively engaged with the first, rotating spindle (14) and also the flywheel-mass bodies operatively disengaged from this spindle are mounted on the rotary friction welding system,
**characterised in that**
the plurality of flywheel-mass bodies (27, 28, 29, 30, 31, 32, 33, 34, 35) are associated with the first, rotating spindle (14) in such a way that when operatively engaged with the first spindle (14) they rotate together with this spindle and when operatively disengaged from the first spindle (14) they stand still with respect to this spindle, and **in that** at least one of the flywheel-mass bodies (34) is fixedly connected to the first, rotating spindle (14), whilst the or each other flywheel-mass body (35) is rotatably mounted on this spindle in such a way that the or each flywheel-mass body that is rotatably mounted on the first spindle can be selectively coupled to and uncoupled from the or each flywheel-mass body fixedly connected to the first spindle.

2. A rotary friction welding system for joining two components, having a first, rotating spindle (14) and a second, non-rotating spindle (15), wherein a first component (11) of the components that are to be connected together is mounted on the first spindle (14), and a second component (12) of the components that are to be connected together is mounted on the second spindle (15), and having a plurality of flywheel-mass bodies mounted on the rotary friction welding system, wherein the flywheel-mass bodies cooperate with the first, rotating spindle (14) in such a way that at least one of these flywheel-mass bodies can, if necessary, be operatively disengaged from or operatively engaged with the first, rotating spindle (14), wherein both the flywheel-mass bodies operatively engaged with the first, rotating spindle (14) and also the flywheel-mass bodies operatively disengaged from this spindle are mounted on the rotary friction welding system, and wherein the flywheel-mass bodies can be moved to and fro between two magazine halves, and in a position in which they are inserted into a first magazine half (51) are operatively engaged with the first spindle (14) and in a position in which they are inserted into a second magazine half (52) are operatively disengaged from the first spindle (14),
**characterised in that**
the first magazine half (51) is fixedly connected to the first spindle (14), and the second magazine half (52) can be rotated with respect to the first spindle (14).

3. A rotary friction welding system according to claim 2, **characterised in that**
both magazine halves (51, 52) are formed as a revolver magazine, wherein the two magazine halves (51, 52) have recesses (53) in order to receive the flywheel-mass bodies.

4. A rotary friction welding system according to claim 1, **characterised in that**
the plurality of flywheel-mass bodies (40, 41, 42, 43, 44) is associated with a flywheel-mass shaft (45),
wherein the flywheel-mass shaft (45) is coupled in a known manner to the first, rotating spindle (14) by way of a transmission gear unit (46), and **in that** at least one of the flywheel-mass bodies is fixedly connected to the flywheel-mass shaft, whilst the or each other flywheel-mass body is rotatably mounted on this shaft in such a way that the or each flywheel-mass body rotatably mounted on the flywheel-mass shaft can be selectively coupled to and uncoupled from the or each flywheel-mass body fixedly connected to the flywheel-mass shaft.

## Revendications

1. Dispositif de soudage par friction rotation pour l'assemblage de deux composants, avec une première broche rotative (14) et une seconde broche non rotative (15), sachant que la première broche (14) loge un premier composant (11) parmi les composants à relier entre eux et la seconde broche (15) loge un second composant (12) parmi les composants à relier entre eux, et avec plusieurs corps de masse d'inertie logés sur l'installation de soudage par friction rotation, sachant que les corps de masse d'inertie coagissent avec la première broche rotative (14) de telle manière qu'au moins l'un de ces corps de masse d'inertie puisse être amené, en cas de besoin, hors engagement fonctionnel ou en engagement fonctionnel avec la première broche rotative (14), sachant que non seulement les corps de masse d'inertie se trouvant en engagement fonctionnel avec la première broche rotative (14) mais aussi les corps de masse d'inertie se trouvant hors engagement fonctionnel avec celle-ci sont logés sur l'installation de soudage par friction rotation, **caractérisé en ce que** la pluralité de corps de masse d'inertie (27, 28, 29, 30, 31, 32, 33, 34, 35) est associée à la première broche rotative (14), de telle manière que ceux-ci tournent en engagement fonctionnel avec la première broche (14) conjointement avec celle-ci et s'arrêtent hors engagement fonctionnel avec la première broche (14) par rapport à celle-ci, et **en ce qu'**au moins l'un des corps de masse d'inertie (34) est fixement relié à la première broche rotative (14), alors que le ou chaque autre corps de masse d'inertie (35) est logé de manière rotative sur celle-ci de telle manière que le ou chaque corps de masse d'inertie logé de manière rotative sur la première broche puisse être couplé et découplé de manière sélective du ou de chaque corps de masse d'inertie relié fixement à la première broche.

2. Dispositif de soudage par friction rotation pour l'assemblage de deux composants, avec une première broche rotative (14) et une seconde broche non rotative (15), sachant que la première broche (14) loge un premier composant (11) parmi les composants à relier entre eux et la seconde broche (15) loge un second composant (12) parmi les composants à relier entre eux, et avec plusieurs corps de masse d'inertie logés sur l'installation de soudage par friction rotation, sachant que les corps de masse d'inertie coagissent avec la première broche rotative (14) de telle manière qu'au moins l'un de ces corps de masse d'inertie puisse être amené, en cas de besoin, hors engagement fonctionnel ou en engagement fonctionnel avec la première broche rotative (14), sachant que non seulement les corps de masse d'inertie se trouvant en engagement fonctionnel avec la première broche rotative (14) mais aussi les corps de masse d'inertie se trouvant hors engagement fonctionnel avec celle-ci sont logés sur l'installation de soudage par friction rotation, et sachant que les corps de masse d'inertie peuvent être déplacés alternativement entre deux moitiés de magasin et sont en engagement fonctionnel avec la première broche (14) dans une position insérée dans une première moitié de magasin (51) et hors engagement fonctionnel avec la première broche (14) dans une position insérée dans une seconde moitié de magasin (52), **caractérisé en ce que** la première moitié de magasin (51) est fixement reliée à la première broche (14) et la seconde moitié de magasin (52) peut être tourné par rapport à la première broche (14).

3. Dispositif de soudage par friction rotation selon la revendication 2, **caractérisé en ce que** les deux moitiés de magasin (51, 52) sont réalisées comme un magasin de tourelle, sachant que les deux moitiés de magasin (51, 52) présentent des évidements (53) afin de recevoir les corps de masse d'inertie.

4. Dispositif de soudage par friction rotation selon la revendication 1, **caractérisé en ce que** la pluralité de corps de masse d'inertie (40, 41, 42, 43, 44) est associée à un arbre de masse d'inertie (45), sachant que l'arbre de masse d'inertie (45) est couplé de manière connue à la première broche rotative (14) par un mécanisme de transmission (46), et **en ce qu'**au moins l'un des corps de masse d'inertie est fixement relié à l'arbre de masse d'inertie, alors que le ou chaque autre corps de masse d'inertie est logé de manière rotative sur celui-ci de telle manière que le ou chaque corps de masse d'inertie logé de manière rotative sur l'arbre de masse d'inertie peut être couplé et découplé de manière sélective du ou de chaque corps de masse d'inertie relié fixement à l'arbre de masse d'inertie.
